# EUROPÄISCHE PATENTANMELDUNG

(11) **EP 4 714 525 A1**
(43) Veröffentlichungstag der Anmeldung: **25.03.2026**
(21) Anmeldenummer: 25200158.1
(22) Anmeldetag: 04.09.2025
(51) Int. Cl.: B01D 53/02

(54) **IMISSIONMINDERUNG IM FAHRZEUGINNENRAUM**

(30) Priorität: 19.09.2024 DE 102024126864
(71) Anmelder: AUDI Aktiengesellschaft, 85057 Ingolstadt (DE)
(72) Erfinder: Müller-Hellwig, Simone, 85051 Ingolstadt (DE); Seifert, Hagen, 93047 Regensburg (DE); Krajete, Alexander, 4061 Pasching (AT)

(57) **Zusammenfassung**

Die Erfindung betrifft eine Filtereinheit zur Entfernung von gasförmigen Verbindungen (NOₓ, SOₓ, VOC, CO etc.) sowie Bakterien und Viren aus Luft, eine Anordnung zur Reduktion des Schadstoffgehaltes der Luft in einem Innenraum, insbesondere einem Kraftfahrzeuginnenraum, sowie ein Verfahren zur Entfernung von gasförmigen Schadstoffen sowie Bakterien und Viren aus der in einen Innenraum, insbesondere einen Fahrzeuginnenraum, geleiteten Luft.

## Beschreibung

Die Erfindung betrifft eine Filtereinheit zur Entfernung von gasförmigen Verbindungen (NOₓ, SOₓ, VOC, CO etc.) sowie Bakterien und Viren aus Luft, eine Anordnung zur Reduktion des Schadstoffgehaltes der Luft in einem Innenraum, insbesondere einem Kraftfahrzeuginnenraum, sowie ein Verfahren zur Entfernung von gasförmigen Schadstoffen sowie Bakterien und Viren aus der in einen Innenraum, insbesondere einen Fahrzeuginnenraum, geleiteten Luft.

Aktuell gibt es nur sehr eingeschränkte Möglichkeiten, um Abgasbestandteile im Fahrzeuginnenraum, beispielsweise aus voranfahrenden Fahrzeugen, zu reduzieren. Eine Möglichkeit ist die "Umlufteinstellung" an der Klimaanlage. Damit wird verhindert, dass viel Luft von außen angesaugt wird. Eine andere Möglichkeit ist die Nutzung der HEPA / Aktivkohlefilter, die bereits in einigen Fahrzeugen verbaut sind. Beide technischen Lösungen sind allerdings nur eingeschränkt für die NOₓ-Reduktion einsetzbar.

Der Nachteil der "Umlufteinstellung" ist, dass sich sehr schnell Schadstoffe, wie CO₂ und NOₓ in der Innenraumluft anreichern, daher ist dies nur eine zeitlich sehr begrenzte Maßnahme. Darüber hinaus steigt auch die Luftfeuchtigkeit schnell an. HEPA Filter in Kombination mit Aktivkohlefilter haben zwar eine filternde Wirkung, jedoch haben viele Filter nur eine sehr begrenzte Kapazität und die beladenen Filter müssen ausgetauscht werden, das beladene Material kann nicht wiederverwertet werden.

Aus der DE10 2018 114 351 A1 ist ein Filtermedium für einen Innenraumluftfilter oder für eine Brennstoffzelle bekannt, das mindestens drei Aktivschichten umfasst: eine katalytische Aktivschicht, die katalytische Aktivkohlepartikel aufweist, eine zweite Aktivschicht, die imprägnierte oder katalytische Aktivkohlepartikel aufweist, und eine dritte Aktivschicht, die imprägnierte oder katalytische Aktivkohlepartikel aufweist, wobei mindestens eine Aktivschicht imprägnierte Aktivkohlepartikel aufweist und die drei Aktivschichten zueinander unterschiedlich sind. Das Filtermedium dient zum Ausfiltern von Stick- und Schwefeloxiden aus der zugeführten Luft. Ferner sind ein Filtermedienkörper umfassend das Filtermedium; ein Filterelement umfassend den Filtermedienkörper oder das Filtermedium; ein Luftfilter umfassend das Filterelement oder den Filtermedienkörper oder das Filtermedium sowie ein Herstellungsverfahren zur Herstellung des Filtermediums beschrieben.

Die DE 10 2005 022 844 A1 offenbart ein Verfahren zur Abtrennung von Geruchsstoffen aus Gasen, bei dem das Gas mit mindestens einem Filter in Kontakt gebracht wird, der ein poröses metallorganisches Gerüstmaterial enthält, wobei das Gerüstmaterial mindestens eine an mindestens ein Metallion koordinativ gebundene, mindestens zweizähnige organische Verbindung enthält.

Vor diesem Hintergrund hat sich die Erfindung die Aufgabe gestellt, Vorrichtungen und Verfahren zur Verfügung zu stellen, mit denen gasförmige Verbindungen (NOₓ, SOₓ, VOC, CO, Formaldehyd, etc.) aus Innenraumluft entfernt werden können.

Die Aufgabe wird erfindungsgemäß gelöst durch Vorrichtungen mit den Merkmalen des Anspruchs 1, des Anspruchs 7 und des Anspruchs 8, und ein Verfahren mit den Merkmalen des Anspruchs 10. Ausgestaltungen und Weiterbildungen der Erfindung ergeben sich aus den abhängigen Ansprüchen, der Beschreibung und den Abbildungen.

Gegenstand der Erfindung ist eine Filtereinheit zur Entfernung von gasförmigen Schadstoffen wie Stickoxiden, Schwefeloxiden, VOC, Kohlenmonoxid oder Formaldehyd aus der Luft in einem geschlossenen Raum (Innenraumluft). In einer Ausführungsform ist der geschlossene Raum ein Fahrzeuginnenraum, insbesondere eine Fahrgastzelle.

Die Filtereinheit umfasst ein Adsorbergranulat enthaltendes geschlossenes Gehäuse mit einem Einlass für Umgebungsluft und einem Auslass für gefilterte Luft. In einer Ausführungsform kann an einem Ende des Gehäuses Luft in die Filtereinheit eingeleitet und an einem gegenüberliegenden Ende Luft aus der Filtereinheit ausgeleitet werden. Die Filtereinheit kann zur Filterung von dem Innenraum zugeführter Frischluft eingesetzt werden und wird entsprechend in der Luftzufuhr angeordnet. In einer Ausführungsform ist die Filtereinheit im Vorderwagen angeordnet, beispielsweise im oder am Wasserkasten, um die angesaugte Luft vor der Einströmung in die Klimaanlage zu filtern. In einer anderen Ausführungsform ist die Filtereinheit in den Laubfang eingebaut. In wieder einer anderen Ausführungsform ist die Filtereinheit in die Klimaanlage integriert, wodurch gegebenenfalls andere Filter (z.B. Hepa-Filter) entfallen können. Die Filtereinheit kann so ausgelegt werden, dass sie über die Lebenszeit des Kraftfahrzeugs nicht ausgetauscht werden muss.

Die Filtereinheit ist mit Adsorbergranulat befüllt, das einfach ausgetauscht und recycelt werden kann. Das Adsorbergranulat kann entnommen und ausgetauscht werden, beispielsweise wenn die Filtereinheit mit gasförmigen Verbindungen (NOₓ, SOₓ, VOC, CO etc.) gesättigt ist. Das Granulat kann recycelt werden, indem die adsorbierten Moleküle beispielsweise durch Wärme vom Granulat abgetrennt werden. Der entstehende Gasstrom wird aufgefangen und Umsetzungsprozessen zugeführt, beispielsweise zur Herstellung von Salpetersäure. Durch den Einsatz der Filtereinheit kann eine dauerhafte Reduktion der Konzentration gasförmiger Schadstoffe im Innenraum erreicht werden.

Das Adsorbergranulat enthält ein manganhaltiges Granulat, das ein Gemisch von Aluminiumhydroxiddiacetat (Al(CH₃COO)₂OH, essigsaure Tonerde) und Permanganat umfasst. Es handelt sich hierbei um ein so genanntes "engineered media". In einer Ausführungsform wird das Granulat hergestellt, indem in einer großen Trommel die essigsaure Tonerde mit dem Permanganat vermischt wird, um eine homogene Durchmischung zu erhalten. Dies hat den Vorteil, dass das komplette Pellet mit Permanganat durchtränkt ist, wodurch sich gegenüber anderen Materialien, die durch Eintauchen eines fertigen Pellets in eine Permanganat-Lösung erhalten werden, bessere Standzeiten und Abscheideleistungen ergeben.

In einer Ausführungsform enthält das manganhaltige Granulat Kaliumpermanganat. In einer anderen Ausführungsform enthält das manganhaltige Granulat Natriumpermanganat. In einer Ausführungsform enthält das manganhaltige Granulat von 5 Gew.-% bis 20 Gew.-% Permanganat, beispielsweise von 8 Gew.-% bis 15 Gew.-% Permanganat. In einer Ausführungsform enthält das manganhaltige Granulat mindestens 8 Gew.-% Kaliumpermanganat. In einer anderen Ausführungsform enthält das manganhaltige Granulat mindestens 12 Gew.-% Natriumpermanganat.

In einer Ausführungsform hat das manganhaltige Granulat einen mittleren Durchmesser von 1 - 2 mm. In einer Ausführungsform beträgt das Schüttgewicht des manganhaltigen Granulats 0,6 - 0,8 kg pro Liter.

In einer Ausführungsform umfasst das Adsorbergranulat außerdem mindestens einen Zeolithen. Zeolithe, die Stickoxide adsorbieren können, sind dem Fachmann im Prinzip bekannt. Beispiele umfassen ZSM-5, Zeolith Y und Mordenit. In einer Ausführungsform wird Naturzeolith mit hohem Silicium-Anteil eingesetzt, beispielsweise Mordenit oder Klinoptilolith.

In einer Ausführungsform enthält das Adsorbergranulat von 5 Gew.-% bis 20 Gew.-% manganhaltiges Granulat, beispielsweise von 5 Gew.-% bis 10 Gew.-% manganhaltiges Granulat, und von 80 Gew.-% bis 95 Gew.-% Zeolith, beispielsweise von 90 Gew.-% bis 95 Gew.-% Zeolith. Der Zeolithanteil des Adsorbergranulats ist vollständig regenerierbar.

Ein Unterschied des erfindungsgemäßen Adsorbergranulats zu Adsorbergranulaten auf Zeolith-Basis des Standes der Technik besteht darin, dass im erfindungsgemäßen Adsorbergranulat der Zeolith selbst als aktives Material wirkt. Es kommen keine beschichteten Zeolithmaterialien zum Einsatz. Des Weiteren ist die Aufnahme von NOₓ aus der Luft unabhängig vom Volumenstrom. Darüber hinaus ist auch die Eingangskonzentration unerheblich. Unabhängig von der Einstellung an einer Klimaanlage, die bis zu 10 kg/min Luft transportiert, wurden im Praxistest mindestens 80 Gew.-% NOₓ adsorbiert, bei Konzentrationen von 10 bis 2.000 ppb NOₓ in der angesaugten Luft.

Die erfindungsgemäße Filtereinheit bietet einen umfangreichen Schutz vor gasförmigen Schadstoffen wie NOₓ, wobei das erfindungsgemäße Adsorbermaterial mindestens 70 Gew.-%, beispielsweise > 80 Gew.-% des im Luftstrom enthaltenen NOₓ adsorbiert. Neben NOₓ werden auch andere gasförmige Schadstoffe adsorbiert, beispielsweise SOₓ, VOC, CO und Formaldehyd. Außerdem werden in der erfindungsgemäßen Filtereinheit auch Bakterien und Viren zurückgehalten und durch das manganhaltige Granulat deaktiviert.

Das erfindungsgemäße Adsorbergranulat kann auch in einer im Innenraum des Fahrzeugs angeordneten Filtereinheit eingesetzt werden, als Standalone-Lösung oder in Kombination mit der Klimaanlage.

Gegenstand der Erfindung ist auch eine Anordnung zur Reduktion des Schadstoffgehalts der Luft in einem geschlossenen Raum, beispielsweise einem Fahrzeuginnenraum, umfassend eine Zuführanlage für Umgebungsluft in den geschlossenen Raum und/oder eine Umluftanlage zum Umwälzen von im geschlossenen Raum befindlicher Luft, wobei die Zuführanlage und/oder die Umluftanlage mindestens eine erfindungsgemäße Filereinheit mit erfindungsgemäßem Adsorbergranulat umfasst bzw. umfassen.

In einer Ausführungsform umfasst die Anordnung sowohl eine Zuführanlage zum Zuführen von Umgebungsluft in den geschlossenen Raum als auch eine Umluftanlage zum Umwälzen von im geschlossenen Raum befindlicher Luft. In einer weiteren Ausführungsform umfassen sowohl die Zuführanlage als auch die Umluftanlage eine erfindungsgemäße Filtereinheit.

Gegenstand der Erfindung ist auch ein Kraftfahrzeug mit einem Innenraum und einer Klimaanlage für den Innenraum, worin die Klimaanlage eine erfindungsgemäße Filtereinheit umfasst.

In einer Ausführungsform umfasst das Kraftfahrzeug eine erfindungsgemäße Filtereinheit, die in einem Laubfang oder in einem Wasserkasten des Kraftfahrzeugs angeordnet ist und in das Kraftfahrzeug eingesaugte Luft vor Eintritt in die Klimaanlage filtert.

In einer Ausführungsform umfasst das Kraftfahrzeug eine Steuerungselektronik, welche auch dafür vorgesehen ist, die erfindungsgemäße Filtereinheit anzusteuern. In einer weiteren Ausführungsform sind die Filtereinheiten separat mittels einer Software-Applikation ("App") steuerbar. In einer Ausführungsform ist die App auf einem mobilen Endgerät eines Nutzers, beispielsweise einem Laptop, Tablet oder Smartphone installiert. In einer anderen Ausführungsform ist die App Bestandteil einer Benutzeroberfläche der Bordelektronik des Kraftfahrzeugs.

Gegenstand der Erfindung ist auch ein Verfahren zur Entfernung von Stickoxiden aus der Luft in einem geschlossenen Raum, bei dem Umgebungsluft durch mindestens eine erfindungsgemäße Filtereinheit geleitet und dann dem geschlossenen Raum zugeführt wird. In einer Ausführungsform des Verfahrens ist die Umgebungsluft Außenluft, die dem geschlossenen Raum zugeführt werden soll. In einer anderen Ausführungsform des Verfahrens ist die Umgebungsluft in dem geschlossenen Raum befindliche Luft. In einer Ausführungsform des Verfahrens werden sowohl Außenluft, die dem geschlossenen Raum zugeführt werden soll, als auch die in dem geschlossenen Raum befindliche Luft jeweils durch eine erfindungsgemäße Filtereinheit geleitet.

Durch den Einsatz der erfindungsgemäßen Anordnung wird permanent eine gute und frische Luft für die Insassen des Fahrzeugs generiert. Das in den Kartuschen eingesetzte Adsorbergranulat kann nach Sättigung mit gasförmigen Schadstoffen einfach entnommen und ausgetauscht werden. Das Granulat kann recycelt und das desorbierte NOₓ einer stofflichen Verwendung zugeführt werden. Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Abbildungen schematisch dargestellt und wird unter Bezugnahme auf die Abbildungen weiter beschrieben. Es zeigt:
- Figur 1: eine schematische Darstellung eines Kraftfahrzeugs mit einer Ausführungsform der erfindungsgemäßen Innenraumluftreinigung;
- Figur 2: ein Diagramm von gemessenen Stickoxidgehalten während einer Messfahrt eines Kraftfahrzeugs mit einer erfindungsgemäßen Filtereinheit.

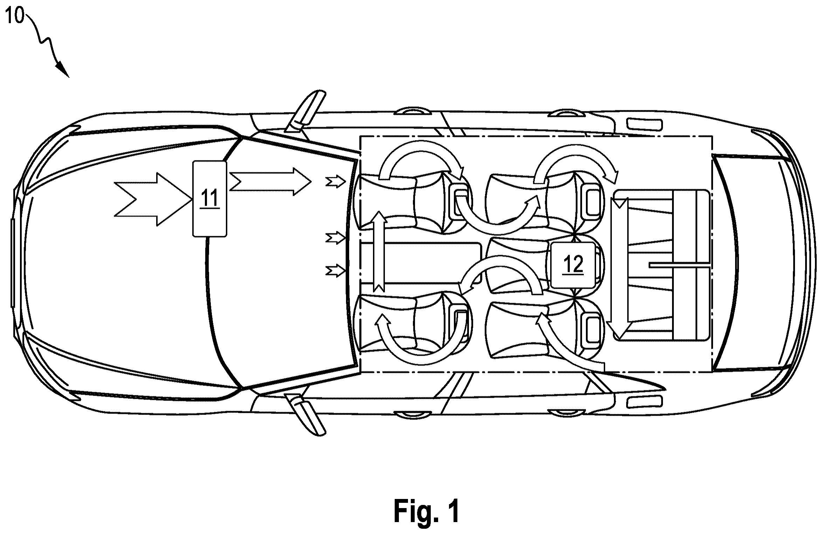

Figur 1 zeigt ein Kraftfahrzeug 10 mit einer Ausführungsform der erfindungsgemäßen Anordnung zur Innenraumluftreinigung. Es sind zwei Filterkartuschen 11, 12 vorgesehen, ein Frischluftfilter 11, der beispielsweise im Laubfang oder im Wasserkasten des Kraftfahrzeugs angeordnet ist, und ein Innenraumfilter 12, der in der Fahrgastzelle angeordnet ist, beispielsweise im Bereich der Rücksitze.

Im Frischluftfilter 11 erfolgt eine kontinuierliche Filterung der angesaugten Luft vor Eintritt in die Klimaanlage durch ein erfindungsgemäßes Adsorbergranulat (500 - 2000 ml), welches gasförmige Schadstoffmoleküle sowie Bakterien und Viren zurückhält. Bei einmaliger Durchströmung des Granulats werden bis zu 95 % der Stickoxide aus der Luft entfernt.

Im Innenraumfilter 12 erfolgt eine kontinuierliche Filterung der Innenraumluft durch ein adsorbierendes erfindungsgemäßes Adsorbergranulat (1000 - 2000 ml). Die Innenraumluft wird mehrfach durch das Granulat gefiltert, die NOₓ Aufnahmerate liegt insgesamt bei ca. 90%. Im Praxistest bewirkte ein Innenraumfilter 12 mit dem erfindungsgemäßen Adsorbergranulat eine deutliche NOₓ Reduktion im Innenraum (ca. 50 bis 80%). Der Innenraumfilter 12 kann fest montiert sein oder auch entnehmbar montiert werden, so dass er beim Verlassen des Fahrzeugs mitgeführt werden und in häuslicher Umgebung zum Einsatz kommen kann.

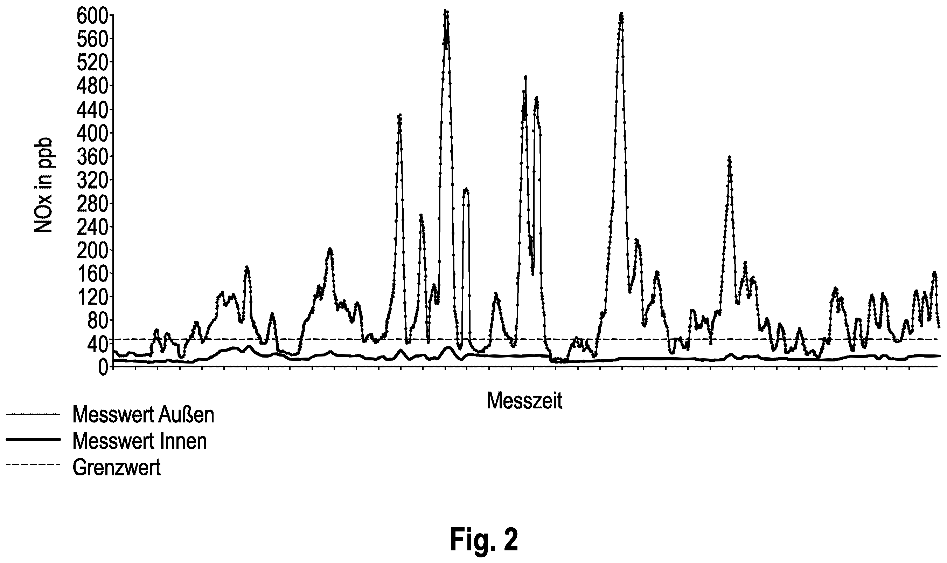

Figur 2 zeigt die Ergebnisse von während einer Messfahrt mit einem eine erfindungsgemäße Filtereinheit als Frischluftfilter enthaltenden Kraftfahrzeug durchgeführten Stickoxidmessungen. Die Filtereinheit enthielt 3 - 4 I Adsorbergranulat. Die Filtereinheit benötigt keine weiteren Lüfter oder ähnliches. Die angesaugte Luft wurde vollständig und permanent gefiltert. Das Adsorbergranulat nimmt NOₓ in einem Temperaturbereich von -20 bis +40 Grad Celsius auf. Neben NOₓ werden auch Viren und Bakterien aufgenommen, darüber hinaus auch Feinstaub und unverbrannte Kohlenwasserstoffe. Die Grafik verdeutlicht die Aufnahme, die gestrichelte Line markiert den NOₓ-Grenzwert. Es ist sehr gut zu erkennen, dass in der dem Kraftfahrzeug zugeführten Außenluft (Rohluft) die Grenzwerte von NO₂ im Bereich der Messfahrt überwiegend überschritten werden. Die Belastung der Fahrzeuginsassen wäre konstant sehr hoch. Durch den Einsatz des im Laubfang angeordneten Frischluftfilters wird die NO₂ Belastung erheblich gemindert.

Das Adsorbergranulat kann leicht abgetrennt und einem Recyclingprozess zugeführt werden, bei dem vom beladenen Adsorbergranulat durch Temperaturerhöhung beispielsweise NOₓ abgetrennt wird. In einem Temperaturbereich von 200°C bis 350°C lösen sich die Moleküle vom Absorber. Die NO und NO₂ Moleküle können in einem nachgeschalteten Prozess mit Wasser zu Salpetersäure bzw. salpetriger Säure reagieren.

### Bezugszeichenliste

- 10: Kraftfahrzeug
- 11: Frischluftfilter
- 12: Innenraumfilter

## Patentansprüche

1. Filtereinheit (11, 12) zur Entfernung von gasförmigen Schadstoffen aus Innenraumluft, insbesondere Innenraumluft einer Fahrgastzelle eines Kraftfahrzeugs (10), umfassend ein Adsorbergranulat enthaltendes geschlossenes Gehäuse mit einem Einlass für Umgebungsluft und einem Auslass für gefilterte Luft, **dadurch gekennzeichnet, dass** das Adsorbergranulat ein manganhaltiges Granulat enthält, das ein Gemisch von Aluminiumhydroxiddiacetat und Permanganat umfasst.

2. Filtereinheit (11, 12) nach Anspruch 1, worin das Adsorbergranulat außerdem mindestens einen Zeolithen enthält.

3. Filtereinheit (11, 12) nach Anspruch 2, worin das Adsorbergranulat von 5 Gew.-% bis 20 Gew.-% manganhaltiges Granulat und von 80 Gew.-% bis 95 Gew.-% Zeolith enthält.

4. Filtereinheit (11, 12) nach einem der Ansprüche 1 bis 3, worin das manganhaltige Granulat von 5 Gew.-% bis 20 Gew.-% Permanganat enthält.

5. Filtereinheit (11, 12) nach einem der Ansprüche 2 bis 4, worin der Zeolith Mordenit und/oder Klinoptilolith umfasst.

6. Filtereinheit (11, 12) nach einem der Ansprüche 1 bis 5, welche dafür konfiguriert ist, im Vorderwagen eines Kraftfahrzeugs (10), insbesondere in einem Laubfang oder in einem Wasserkasten, angeordnet zu werden.

7. Anordnung zur Reduktion des Schadstoffgehalts der Luft in einem geschlossenen Raum, umfassend eine Zuführanlage für Umgebungsluft in den geschlossenen Raum und/oder eine Umluftanlage zum Umwälzen von im geschlossenen Raum befindlicher Luft, wobei die Zuführanlage und/oder die Umluftanlage mindestens eine Filtereinheit (11, 12) nach einem der voranstehenden Ansprüche umfasst.

8. Kraftfahrzeug (10) mit einem Innenraum und einer Klimaanlage für den Innenraum, welches eine Anordnung nach Anspruch 7 umfasst.

9. Kraftfahrzeug (10) nach Anspruch 8, worin die Anordnung eine erste Filtereinheit (11) umfasst, die in einem Laubfang oder in einem Wasserkasten des Kraftfahrzeugs (10) angeordnet ist und in das Kraftfahrzeug eingesaugte Luft vor Eintritt in die Klimaanlage filtert, und gegebenenfalls eine zweite Filtereinheit (12), die in einer Fahrgastzelle des Kraftfahrzeugs (10) angeordnet ist und die Innenraumluft filtert.

10. Verfahren zur Entfernung von gasförmigen Schadstoffen sowie Bakterien und Viren aus der Luft in einem geschlossenen Raum, bei dem Umgebungsluft durch mindestens eine Filtereinheit (11, 12) nach einem der Ansprüche 1 bis 6 geleitet und dann dem geschlossenen Raum zugeführt wird.
